# EUROPEAN PATENT APPLICATION

(11) **EP 1 460 809 A2**
(43) Date of publication of application: **22.09.2004**
(21) Application number: 04006725.8
(22) Date of filing: 19.03.2004
(51) Int. Cl.: H04L 12/56, H04L 12/28

(54) **Layer module for medium access control protocol of a mobile station in a mobile ad hoc network and corresponding method**

(30) Priority: 19.03.2003 KR 2003017180
(71) Applicant: Samsung Electronics Co., Ltd., Suwon-si, Gyeonggi-do (KR)
(72) Inventor: Lee, Jai-Ho, Yeongtong-gu Suwon-si Gyeonggi-do (KR)
(74) Representative: Grünecker, Kinkeldey, Stockmair & Schwanhäusser Anwaltssozietät

(57) **Abstract**

A system method for transmitting/receiving frames of a MAC (Medium Access Control) protocol layer module that processes data frames and control frames transferred from a MANET (Mobile Ad Hoc Network) protocol layer module in a station receiving frames transmitted through a MANET including a plurality of stations. The method comprises: (1) distinguishing between control frames and data frames in analyzing frames transferred from the MANET protocol layer module; (2) providing the control frames with higher priority than the data frames so that the control frames firstly preempt a medium earlier than the data frames; and (3) transmitting the control frames and the data frames in order according to their respective priorities. By the construction, the control frames are processed first in preempting a medium, before the data frames, in the MAC layer of a station in which the MANET exists, thereby preventing the data loss caused by transmitting the data frames first.

## Description

The present invention relates to a mobile ad hoc network (MANET) which forms a network with a plurality of mobile stations (hereinafter, referred to as "stations"), and more particularly to a medium access control (MAC) protocol layer module of a station in the MANET and a method for transmitting/receiving frames of the MAC protocol layer module.

A MANET is an infrastructureless network without a fixed router, a host, and a wireless base station. In the MANET, mobile nodes are connected by utilizing multi-hopping technology of a peer-to-peer level. The topology of the MANET may change dynamically and the network has self-forming and self healing functions. Since it is not a network in which only fixed base stations can provide mobile services, each node itself may form a network routing infrastructure in an ad hoc form and each node comprised in the MANET has no restriction from moving freely. Therefore, the MANET uses a protocol that can be adapted to structural changes according to rapid movement of nodes.

In order to form and maintain routes, such a MANET protocol uses a path discovery process, a route table management process, a path maintenance process, etc. The MANET protocol transmits actual data after routers are established through the processes described above. The processes used for forming routers utilize control packets, such as a route request message, a route response message, a route maintenance message, etc. The control packets are essential packets to form routers. When the routers are formed most quickly in transmitting and receiving such control packets first of all and in accomplishing an agreement among nodes, which desire to establish a routing path, the transmission of actual data packets is executed.

The basic access in the IEEE (Institute of Electrical and Electronics Engineers) 802.11 MAC protocol follows the DCF (Distributed Coordination Function). The DCF is based on CSMA/CA (Carrier Sense Multiple Access with Collision Avoidance), by which preoccupying each medium is equally executed at all stations. The MAC protocol using the DCF waits for the interframe space, which is called DIFS (Distributed Inter Frame Space), and attempts to most equally distribute a medium to several stations by using a Random Backoff algorithm.

In addition, a PCF (Point Coordination Function), which may be selectively provided to the MAC protocol, has been proposed. The PCF includes a polling operation performed by a PC (point coordinator) positioned at the center so as to add priority to stations located in the range of the PC, thus supporting time-bounded information. However, the PCF is an access method to be used only in an infrastructure mode, and not to be used in an ad hoc network.

The MANET protocol distinguishes transmitted packets into control packets and data packets, but the 802.11 MAC protocol processes them as the same data frames. That is, because the 802.11 MAC is operated on the CSMA/CA method, data frames other than the control frame used for the internal processing in the 802.11 MAC have a same level, so that it is possible to access equally to data of all stations.

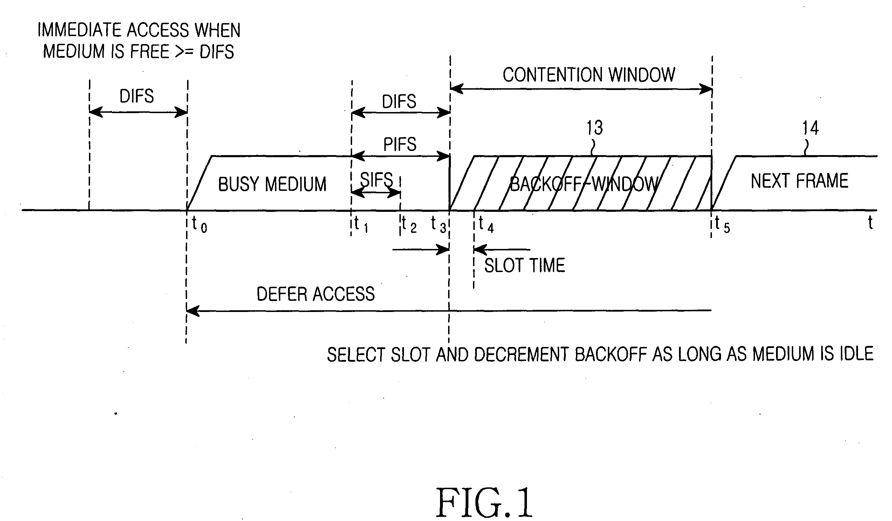

FIG. 1 illustrates a basic access method in a conventional MAC layer. Referring to FIG. 1, under access contention, stations contend with each other in order to preempt a medium. If a station attempts a transmission to a medium while the medium is busy t0∼t1, the station having attempted the transmission recognizes the medium to be busy and then waits until the present transmission in process is over. After the prior transmission is over, the station waits for an interframe space, for example, SIFS (Short Inter Frame Space) or DIFS (Distributed Inter Frame Space), then a backoff window t3~t5 is set by the value of contention window (CW) 13 generated when the station does not preempt a medium. That is, the backoff window is set by multiplying a slot time t3~t5 by a pseudo random number generated from a station itself. After the backoff window is set, the station waits for data transmission of the MAC protocol while performing a backoff process of removing backoff slots by steps with the passage of time to lessen the backoff window.

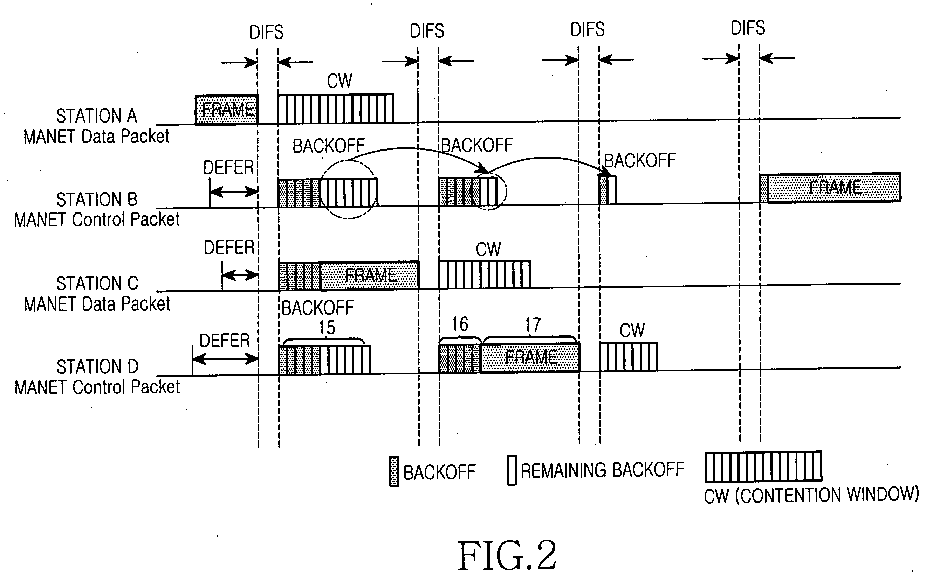

FIG. 2 illustrates a method for preempting a medium in the conventional 801.11 MAC. That is, FIG. 2 illustrates a conventional method for a plurality of stations A, B, C, and D with random backoff windows to preempt a medium through the backoff process in access contention. Referring to FIG. 2, without priority among stations, each station preempts a medium and then transmits MAC protocol data frames. First, a station sets a waiting time according to the value of contention window (CW) generated in pseudo random, starts medium preemption after waiting for the CW, and then removes as many backoff slots as the number of slots that the medium is idle after a backoff window is set. Therefore, the longer a station waits, the shorter a waiting time of the station remains, thus having higher transmission opportunity. Such a method provides the most equity to stations in access contention so as to use a medium. The backoff window is set by generating a pseudo random number without distinction of station in a condition that the station has a MAC protocol data frame for transmission. If an average value is computed, it will show that each station has the same CW.

A description will now be given of a sequence in which each station preempts a medium and then transmits frames.

After station A, which has firstly preempted a medium, completes its frame transmission, the remaining backoff window of station C is passed. The remaining backoff window is the backoff window left from a backoff window removal process carried out during the frame transmission of the station A. A frame transmission of station C is stated after the remaining backoff window of station C is passed. During the frame transmission of station C, backoff slots 15 generated at the time of its medium access in the station D are removed one by one. When the frame transmission of station C is completed, the time for DIFS (Distributed Inter Frame Space) and remaining backoff slots 16 in the station D is sequentially passed, and then station D preempts the medium and transmits frames thereof. Station B shows a case that backoff window thereof has been set to have the longest time. While station C and station D sequentially preempt the medium and transmit frames, station B is on standby and is removing backoff slots one by one. Subsequently, when the frame transmission of station D is completed, the station B preempts the medium and transmits frames thereof. Herein, it can be seen that frame transmission sequence of stations does not have any relation to when medium access is achieved and whether each transmission frame is a control frame or a data frame.

Due to such an 802.11 MAC characteristic that control packets for forming a route and general data packets are equally transmitted, when the MANET protocol is applied to the 802.11 MAC, each medium access proceeds without distinction of two kinds of packets. This may generate a case that a data packet is firstly transmitted before control packets to form a route are transmitted. Since such operation causes data to be transmitted without an exact construction for their destination, a data loss may be generated in transmitting data, and the data throughput of transmitting the whole data is decreased.

Accordingly, the present invention has been designed to solve the above and other problems occurring in the prior art.

The object of the present invention is to provide a MAC (Medium Access Control) protocol layer module which transmits control frames before transmitting data frames so as to form a routing path as soon as possible and thus deceases data loss, and a method for transmitting/receiving frames of the same module.

This object is solved by the subject matters of the independent claims.

Preferred embodiments are provided in the dependent claims.

An aspect of the present invention is to provide a MAC protocol for transmitting control frames and data frames to provide each packet with priority to distinguish the control frames and the data frames transmitted from the MANET protocol.

In order to accomplish the above, there is provided a method for transmitting/receiving frames of a MAC (Medium Access Control) protocol layer module for processing data frames and control frames transferred from a MANET (Mobile Ad Hoc Network) protocol layer module in a station, the station receiving frames transmitted through a MANET which includes a plurality of stations, the method comprising the steps of: (1) distinguishing between control frames and data frames in analyzing frames transferred from the MANET protocol layer module; (2) providing the control frames with higher priority than the data frames, enabling the control frames to preempt a medium earlier than the data frames; and (3) transmitting the control frames and the data frames in order according to their respective priorities.

In accordance with another aspect of the present invention, there is provided a MAC (Medium Access Control) protocol layer module for processing data frames and control frames transferred from a MANET (Mobile Ad Hoc Network) protocol layer module in a station, the station receiving frames transmitted through a MANET including a plurality of stations, the MAC protocol layer module comprising: a frame generation section for generating frames in distinguishing whether frames input from the MANET protocol layer module are control frames or data frames; a priority setting section for providing the control frames with higher priority as compared to the data frames in the frames generated from the frame generation section; and a frame transmission/receipt process section for transmitting and receiving the control frames and the data frames according to priority set by the priority setting section.

The above features and advantages of the present invention will be more apparent from the following detailed description taken in conjunction with the accompanying drawings, in which:
FIG. 1 illustrates a basic access method in a conventional MAC layer;
FIG. 2 illustrates a method for preempting a medium in the conventional 801.11 MAC;
FIG. 3 is a schematic diagram of a MANET protocol layer module and a MAC protocol layer module according to the present invention;
FIG. 4 is a format diagram of a frame control field in the 802.11 MAC;
FIG. 5 is a table of type values and subtype values according to a MANET frame;
FIG. 6 is a diagram illustrating priority according to each MANET frame;
FIG. 7 illustrates an access method of the improved 802.11 MAC in the MANET according to the present invention;
FIG. 8 illustrates a medium preemption process in the 802.11 MAC according to the present invention;
FIG. 9 is a flowchart illustrating a generation process of the MANET control frames and MANET data frames in distinction of MANET packets; and
FIG. 10 is a flowchart illustrating a medium access control process proceeded according to MANET control frames and MANET data frames.

Hereinafter, a MAC (Medium Access Control) protocol layer module of a mobile in a mobile ad hoc network and a method for transmitting/receiving frames of the module according to preferred embodiments of the present invention will be described with reference to the accompanying drawings. It is to be noted that the same elements are indicated with the same reference numerals throughout the drawings. Also, in the following description of the present invention, a detailed description of known functions and configurations incorporated herein will be omitted when it may make the subject matter of the present invention rather unclear.

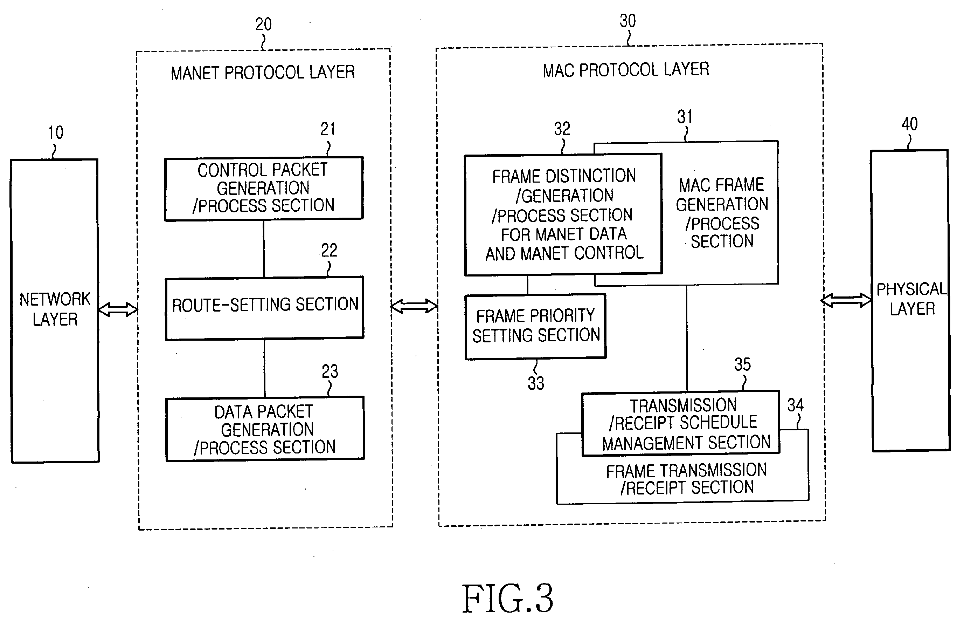

FIG. 3 is a schematic diagram of a MANET protocol layer module and a MAC protocol layer module according to the present invention. As illustrated in FIG. 3, a MANET protocol layer module 20 includes a control packet generation/process section 21 for distinctively generating and processing control packets and data packets, a data packet generation/process section 23, and a route-setting section 22 for forming and maintaining a route by the control packets. The MANET protocol layer module 20 transmits and receives data in link with a network layer 10. A MAC protocol layer module 30 transmits and receives data in link with a physical layer 40.

The MAC protocol layer module 30 includes a MAC frame generation/process section 31, a frame priority setting section 33, and a frame transmission/receipt section 34. The MAC frame generation/process section 31 processes MAC frames by a frame distinction/generation/process section 32 which processes packets distinctively inputted from the MANET protocol layer module 20 to the MAC frame generation/process section 31 and generates MANET control frames and MANET data frames. The frame priority setting section 33 provides MANET control frames with a higher priority and provides MANET data frames with lower priority when generating the MANET control frames and the MANET data frames. The frame transmission/receipt section 34 has a transmission/receipt schedule management section 35, which processes transmission and receipt of frames according to the priority of each frame provided by the present invention, and controls to transmit and to receive frames. The transmission/receipt schedule management section 35 manages a schedule transmitting and receiving MAC frames in accordance with the priority provided according to each MAC frame.

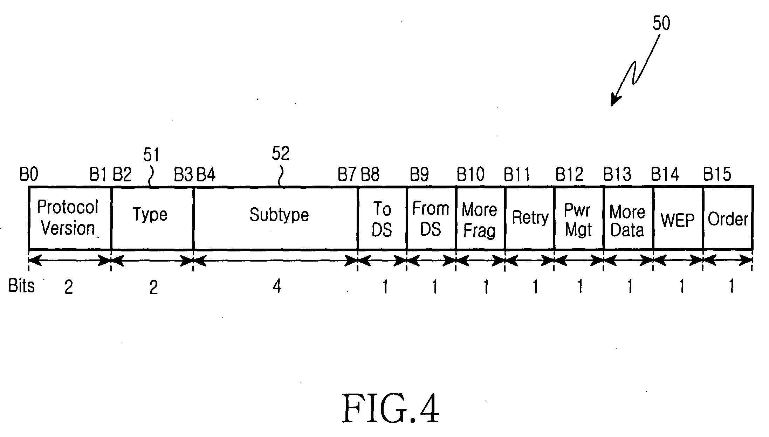

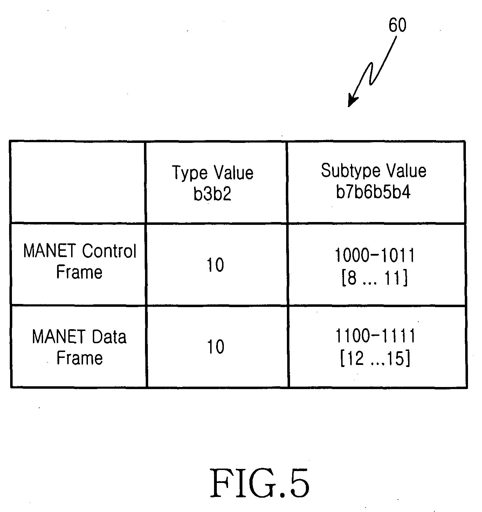

FIG. 4 is a format diagram of a frame control field in the 802.11 MAC. That is, FIG. 4 schematizes a frame control field 50 in an 802.11 MAC frame format. In the present invention, particular values are set in areas of the frame control field 50 to distinguish the MANET control frames and the MANET data frames. Also, in order to preserve compatibility with the conventional 802.11 MAC, the values in the frame control field 50 according to the present invention are changed within a range, which does not influence or alter values used in the frame control field 50. Therefore, changing 'Subtype' area 52 is proposed in the present invention. Both the MANET control frame and the MANET data frame are data frames from the viewpoint of the 802.11 MAC protocol, so that both of them have a format of data type. A value set in the 'Type' area 51 of the frame control field 50 represents that the frame is a frame of the MANET protocol layer. Therefore, in this embodiment of the present invention, unused values, which are described clearly as redundant part, in set values of the 'Subtype' area 52 are used to make changes without influencing the conventional MAC frame. The 'Subtype' values set for the MANET control frames and the MANET data frames are illustrated in FIG. 5.

FIG. 5 is a table of type values and subtype values according to a MANET frame. As illustrated in FIG. 5, the 'Type' value is set with the binary number '10', which represents a frame related to the MANET. A range of values that can be used as a 'Subtype' value is '1000₂∼1111₂' in binary numbers. That is, a range of the 'Subtype' value is 8-15 in decimal numbers, a frame having a value in this range represents that the frame relates to the MANET. Herein, the MANET control frames are represented as '1000₂∼1011₂' and the MANET data frames are represented as '1100₂∼1111₂'. Each binary value assigned as above becomes a priority value for preempting a medium.

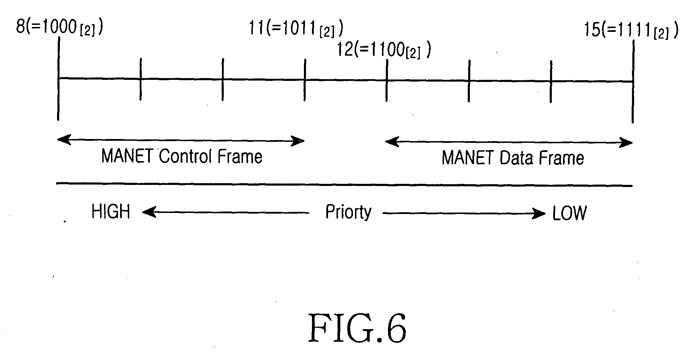

FIG. 6 is a diagram illustrating priority according to each MANET frame. The higher value the 'Subtype' area has, the lower priority its frame has. also in addition, the lower value the 'Subtype' area has, the higher priority its frame has. In the MANET protocol layer module 20 as illustrated in FIG. 5, a process for generating priority of each fame is as follows.

When receiving data packets from the MANET protocol layer module 20, the 802.11 MAC protocol layer 30 generates frames, which are called 'MANET data frame' in the present invention. In the frame control field 50 of MANET frame format, the value of 'Type' area is a binary number '10' (b3,b2) and the value of 'Subtype' area may be one of binary numbers '1100∼1111' (b7b6b5b4). The first value of the 'Subtype' area is set as '1111', the present value of the 'Subtype' area is changed to a binary number obtained by N = N - 1 (N ≥8) at each wait time. Therefore, when a station has waited once, the value of 'Subtype' area is changed to a binary number '1110', and when the station has waited two times, the value of 'Subtype' area is changed to a binary number '1101'. By using the method described above, the value of 'Subtype' area which has a relatively lower priority is gradually changed to a higher priority according to repeated waits, thereby preventing a frame having a relatively lower priority from preempting a medium continuously. Also, when receiving control packets from the MANET protocol layer module 20, the 802.11 MAC protocol layer 30 generates frames called 'MANET control frames' in the present invention. In the frame control field 50 of MAC frame format, the value of 'Type' area is a binary number '10' (b3,b2) and the value of 'Subtype' area may be one of binary numbers '1000∼1011' (b7b6b5b4). The first value of the 'Subtype' area is set as '1011', the present value of the 'Subtype' area is changed to a binary number obtained by N = N - 1 (N ≥8) at each time of waiting. Therefore, in accordance with increasing the number of wait times , the MANET control frame has higher and higher priority, and thus it is prevented that a MANET control frame endlessly waits for preempting a medium.

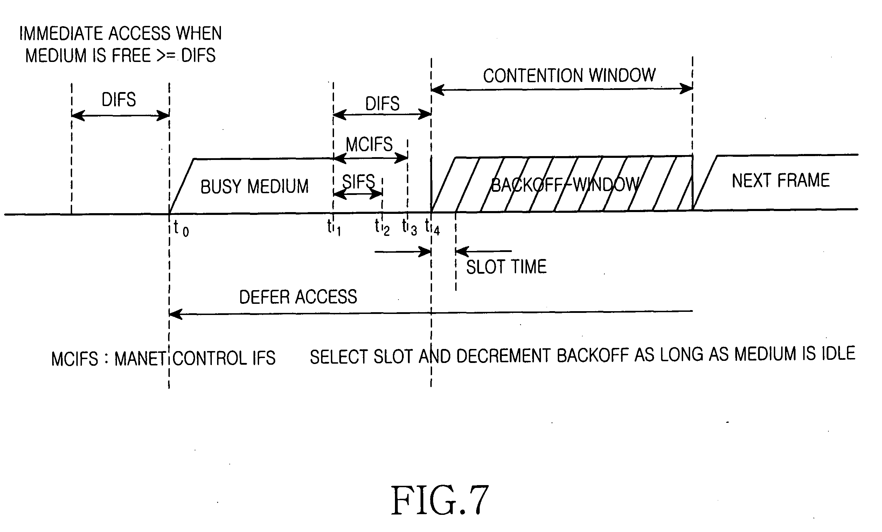

FIG. 7 illustrates an access method of the improved 802.11 MAC in the MANET according to the present invention. DIFS (Distributed Inter Frame Space) t1∼t4 represents a waiting time of data frames, MCIFS (MANET Control Inter Frame Space) t1∼t3 represents a waiting time of the control frames, and SIFS (Short Inter Frame Space) t1∼t2 represents a waiting time to exchange control data for control between the MANET control protocol and the MAC control protocol. As illustrated in FIG. 7, when transmitting data frames, not all stations preempt a medium equally. A frame having a priority for the MANET control frames uses the MCIFS t1∼t3 as a waiting time, and a frame having a priority for the data frames uses the DIFC t1∼t4 as a wait time. Therefore, a station having the MCIFS as a waiting time has higher priority, in preempting a medium, than another station having the DIFS as a wait time.

By using the method described above, the MAC protocol layer can quickly process the control packets, which need to form and maintain a route in the MANET. MANET control packets are processed more quickly than data packets, thereby preventing loss of the data packets caused by transmission of the data packets before formation of a route in the MANET, and improving throughput of data.

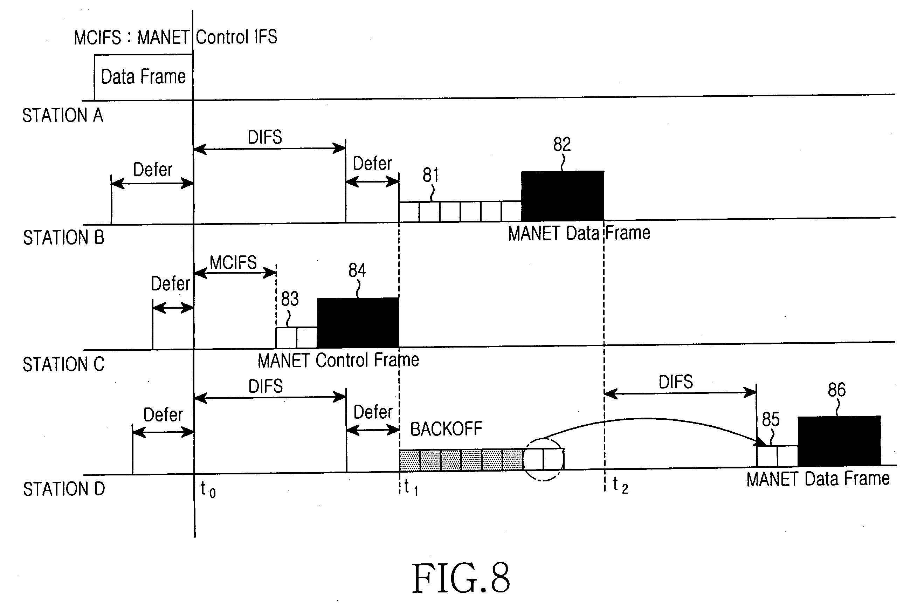

FIG. 8 illustrates a medium preemption process in the 802.11 MAC according to the present invention. As illustrated in FIG. 8, each station A, B, C, and D has different priority according to whether having the MANET control frame or the MANET data frame, and has different IFS (Inter Frame Space) from each other according to the priority, and thus transmits each frame in preempting a medium at intervals of different IFSs (Inter Frame Spaces). When transmitting frames, a station having a relatively higher priority has a shorter IFS generated in considering the priority, so that the station has higher probability in preempting a medium and also has a shorter interval between opportunities capable of preempting a medium. Therefore, MANET control frames are transmitted and processed more quickly than MANET data frames, so that a route can be more quickly formed and maintained in the MANET, thereby minimizing the loss of data packets. The initial point of Defer indicates the access point of each station. Station B has a quicker access point as compared to station C, but accesses to transmit a MANET data frame, and thus the station B has a lower priority than station C to transmit a MANET control frame. Therefore, after passing the time of DIFS, the station B is on standby until transmission of the MANET control frame 84 of station C is completed, passes the time of remaining backoff slots 81 from a backoff window removal process proceeded for the frame transmission time of the station C, and then starts to transmit its MANET data frame 82. Station D shows a case that a station accesses to transmit a MANET data frame like the station B but is set with a longer backoff time as compared to station B. After the transmission of the MANET data frame of station B is completed, station D passes the time for the DIFS and the backoff slots 85 left in the removing process till then, and then starts to transmit its MANET data frame 86.

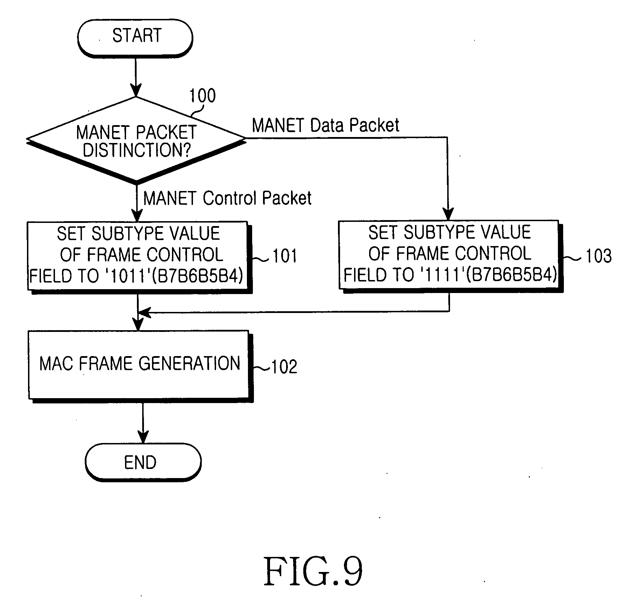

FIG. 9 is a flowchart illustrating a generation process of the MANET control frames and MANET data frames in distinction of MANET packets. That is, the flowchart shows a process in which the MAC protocol layer module 30 generates MAC frames in distinguishing between MANET control frames and MANET data frames when receiving control packets and data frames output from the MANET protocol layer module 20. Herein, when the packets, which are in the MANET protocol layer module 20, are transferred to the MAC protocol layer module 30, they are called 'frames'. As illustrated in FIG. 9, in step 100, the frame distinction/generation/process section 32 distinguishes MANET packets. As a result of the distinction, if the MANET packet is a MANET control packet, the frame priority setting section 33 sets the 'Subtype' value as the highest priority value '1011' (b7b6b5b4) of priority values for control packets in which the 'Subtype' value is in the frame control field 50 illustrated in FIG. 4 in step 101, and the frame distinction/generation/process section 32 generates MAC frame in step 102. If the MANET packet is a data packet, the frame priority setting section 33 sets the 'Subtype' value of the frame control field 50 as the highest priority value '1111' (b7b6b5b4) of priority values for data packets in step 103, and then the frame distinction/generation/process section 32 generates MAC frame in step 102.

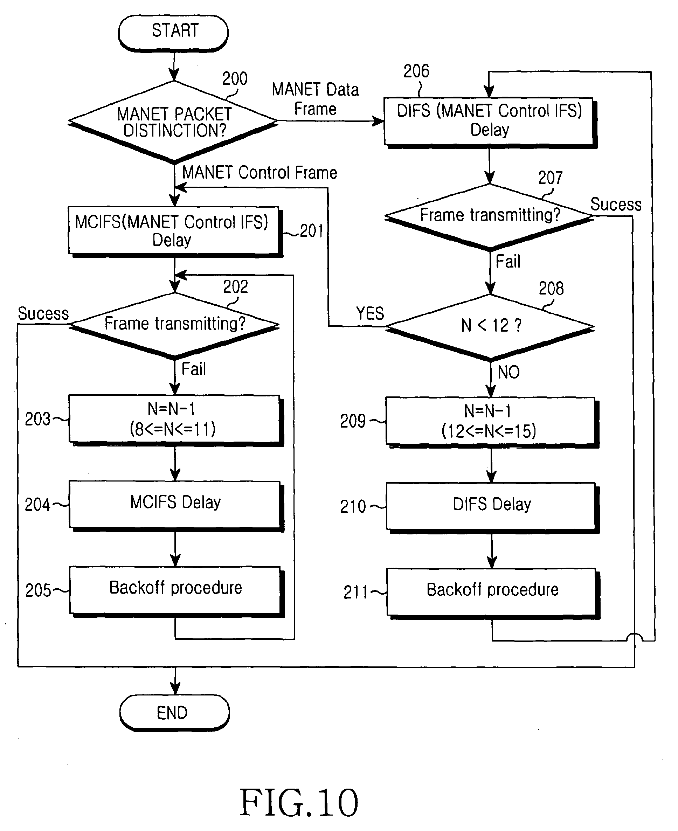

FIG. 10 is a flowchart illustrating a medium access control process according to MANET control frames and MANET data frames. When the frame distinction/generation/process section 32 in the MAC protocol layer module 30 generates MANET control frames and MANET data frames, the frame priority setting section 33 sets priority to preempt a medium according to frame. That is, FIG. 10 is a flowchart in which the MANET control frame firstly preempts a medium by a relatively higher priority value provided from the frame priority setting section 33, and thus may be first transmitted. In step 200, the frame distinction/generation/process section 32 in the MAC protocol layer module 30 distinguishes a MANET packet transferred from the MANET protocol layer module 20, if the MANET packet is a MANET control frame, step 201 proceeds in which the transmission/receipt schedule management section 35 delays transmission of the MANET control frame for the time of MCIFS (MANET Control IFS). In step 202, if it is confirmed that the frame transmission of the station has failed, the frame priority setting section 33 decreases the priority value by '1' within a range of '8 ≤ N ≤ 11' in step 203. In step 204, the transmission/receipt schedule management section 35 delays the frame transmission for the time of the MCIFS (MANET Control IFS) according to the decreased priority value. Subsequently, step 205, a backoff procedure is performed.

As a result in which the frame distinction/generation/process section 32 distinguishes the MANET packet at the step 200, if the MANET packet is a MANET data frame, the transmission/receipt schedule management section 35 transmits the MANET data frame after delaying transmission of the MANET data frame for the time of DIFS (Distributed IFS) in step 206. In step 207, if it is confirmed that the frame transmission is failed, the transmission/receipt schedule management section 35 confirms whether the priority value of the MANET data frame is smaller than '12' in step 208. If the priority value is smaller than '12', the process returns to the step 201 in which the transmission/receipt schedule management section 35 delays transmission for the time of MCIFS for the MANET control frame. However, if the priority value is not smaller than '12', the frame priority setting section 33 decreases the priority value by '1' within a range of '8 ≤ N ≤ 11' in step 209. In the step 210, the transmission/receipt schedule management section 35 delays the frame transmission for the time of the DIFS (Distributed IFS). Subsequently, in step 211 a backoff procedure proceeds, and then the process returns to the step 206.

As described above, the MANET protocol layer module transmits packets to the MAC protocol layer module in distinguishing between control packets and data packets, and the MAC protocol layer module sets the priority value of MANET control frames to have a higher value as compared to MANET data frames when generating the MANET control frames and the MANET data frames in distinguishing the received packets, so that the MANET control frames can firstly preempt a medium on transmitting/receiving the MANET control frames and the MANET data frames.

While the invention has been shown and described with reference to certain preferred embodiments thereof, it will be understood by those skilled in the art that various changes in form and details may be made therein without departing from the scope of the invention as defined by the appended claims.

## Claims

1. A method for transmitting and receiving frames of a MAC protocol layer module that processes data frames and control frames transferred from a mobile ad hoc network protocol layer module in a station that receives frames transmitted through a mobile ad hoc network including a plurality of stations, the method comprising the steps of:
(1) distinguishing between control frames and data frames when analyzing frames transferred from the mobile ad hoc network protocol layer module;
(2) providing the control frames with a higher priority than the data frames, thereby enabling the control frames to preempt a medium earlier than the data frames; and
(3) transmitting the control frames and the data frames in an order according to their respective priorities.

2. The method as claimed in claim 1, wherein the mobile ad hoc network protocol layer module transfers a frame control field, which includes a 'type' area indicating mobile ad hoc network data and a 'Subtype' area, to the MAC protocol layer module.

3. The method as claimed in claim 2, wherein the mobile ad hoc network protocol layer module transfers the frame control field to the MAC protocol layer module, in setting discrimination values into the 'Subtype' area of the frame control field to distinguish between the control frames and the data frames.

4. The method as claimed in claim 3, wherein the step (2) comprises a sub-step in which the MAC protocol layer module sets discrimination values into the 'Subtype' area of the frame control field to discriminate the priority of the data frames and the control frames.

5. The method as claimed in claim 4, further comprising changing the discrimination values to increase the priority by one phase when one of medium preemption of the control frames and the data frames have failed.

6. A MAC protocol layer module for processing data frames and control frames transferred from a mobile ad hoc network protocol layer module in a station receiving frames transmitted through a mobile ad hoc network including a plurality of stations, the MAC protocol layer module comprising:
a frame generation section for generating frames to distinguish whether frames input from the mobile ad hoc network protocol layer module are control frames or data frames;
a priority setting section for providing the control frames with a higher priority as compared to the data frames in the frames generated from the frame generation section; and
a frame transmission/receipt process section for transmitting and receiving the control frames and the data frames according to priorities set by the priority setting section.

7. The MAC protocol layer module of claim 6 adapted to perform the method for transmitting and receiving frames according to one of claims 1 to 5.
